# EUROPEAN PATENT APPLICATION

(11) **EP 2 138 126 A2**
(43) Date of publication of application: **30.12.2009**
(21) Application number: 09163627.4
(22) Date of filing: 24.06.2009
(51) Int. Cl.: A61C 17/34

(54) **Electric toothbrush**

(30) Priority: 27.06.2008 JP 2008168727
(71) Applicant: Panasonic Electric Works Co., Ltd., Kadoma 571-8686 Osaka (JP)
(72) Inventor: Masuko, Yoshinori, Kadoma 571-8686 Osaka (JP)
(74) Representative: Skuhra, Udo

(57) **Abstract**

An electric toothbrush (10) is provided with a brush portion (19), a motor (13) including a rotary shaft (13a), a battery (20), which supplies the motor (13) with power supply voltage, and an eccentric shaft (15), which rotates together with the rotary shaft (13a). The eccentric shaft (15) has a center of gravity located at a position deviated from an axis of the rotary shaft (13a) of the motor (13). An oscillation transmission mechanism (16) transmits oscillations generated by the rotation of the eccentric shaft (15). An oscillation amplitude regulation circuit (23, 21; 31) regulates an oscillation amplitude (S) of the brush portion (19) to be constant regardless of changes in the power supply voltage in a state in which the brush portion (19) is free from external loads.

## Description

This application claims the benefit of Japanese Patent Application No. 2008-168727, filed on June 27, 2008, the entire contents of which are incorporated herein by reference.

The present invention relates to an electric toothbrush.

A typical electric brush includes a brush portion that is oscillated by a motor. Japanese Laid-Open Patent Publication No. 9-173360 describes an electric toothbrush including a motion conversion mechanism, which converts the rotation produced by a motor to two types of different motions that are transmitted to the brush portion so as to move the brush portion in constant oscillation amplitude. Japanese Laid-Open Patent Publication No. 2008-80099 describes an electric toothbrush including an eccentric shaft, which generates oscillations when rotated by a motor, and an oscillation transmission component, which transmits the oscillation of the eccentric shaft to the brush portion, so as to reduce power consumption and produce high-speed rotations.

In the electric toothbrush of the '360 publication, the motion conversion mechanism mechanically converts the rotation of the motor to oscillation of the brush portion so as to oscillate the brush portion in constant oscillation amplitude. However, due to the external load applied by the brush portion, it is difficult for the motor to produce high-speed rotations. Further, this electric toothbrush consumes much power.

In the electric toothbrush of the '099 electric toothbrush, the eccentric shaft is rotated to generate oscillations so as to produce high-speed rotations. However, as the power supply voltage decreases, the oscillation amplitude of the brush portion decreases and lowers the brushing performance.

It is an object of the present invention to provide an electric toothbrush that produces high-speed rotations with a motor and always moves the brush portion in constant oscillation amplitude even when the power supply voltage decreases.

One aspect of the present invention is an electric toothbrush provided with a brush portion, a motor including a rotary shaft, a battery which supplies the motor with power supply voltage, and an eccentric shaft which rotates together with the rotary shaft. The eccentric shaft has a center of gravity located at a position deviated from an axis of the rotary shaft of the motor. An oscillation transmission mechanism transmits oscillations generated by the rotation of the eccentric shaft to the brush portion. An oscillation amplitude regulation circuit regulates an oscillation amplitude of the brush portion to be constant regardless of changes in the power supply voltage in a state in which the brush portion is free from external loads.

Other aspects and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1(a) is a cross-sectional side view and Fig. 1(b) is a cross-sectional plan view, each showing a first embodiment of an electric toothbrush;
Fig. 2 is a block diagram of the electric toothbrush shown in Fig. 1;
Fig. 3 is a graph showing the relationship between the oscillation amplitude of a brush portion, the power supply voltage, and the rotation speed of a motor;
Figs. 4(a) to 4(c) are timing charts showing the relationship between the time power supply voltage is supplied and the rotation speed of the motor;
Fig. 5 is a block diagram of a second embodiment of an electric toothbrush;
Fig. 6 is a block diagram of a third embodiment of an electric toothbrush; and
Fig. 7 is a block diagram of a fourth embodiment of an electric toothbrush.

A first embodiment of an electric toothbrush according to the present invention will now be discussed.

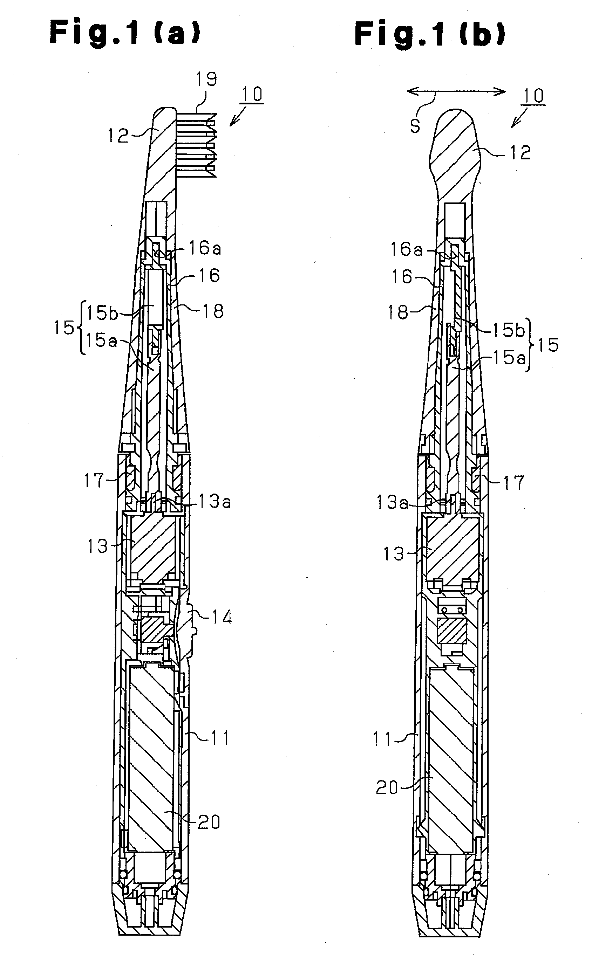

Referring to Fig. 1, an electric toothbrush 10 includes a grip, or case 11, and a brush unit 12, which is detachably attached to the distal end of the case 11. The case 11 may be elongated and cylindrical. The case 11 accommodates a motor 13 and a battery 20, which supplies power supply voltage. A switch button 14 arranged on the case 11 is used to switch the motor 13 ON and OFF.

The motor 13 includes a rotary shaft 13a, which extends toward the distal end of the case 11 in the longitudinal direction of the case 11. An eccentric shaft 15 is attached to the rotary shaft 13a. The eccentric shaft 15 includes an elongated main shaft body 15a and a weight 15b, the center of gravity of which is deviated in the radial direction from the axis of the rotary shaft 13a. The weight 15b is attached to the distal end of the main shaft body 15a.

The eccentric shaft 15 is enclosed in an oscillation transmission member 16, which functions as an oscillation transmission mechanism. The oscillation transmission member 16 is fixed to the case 11 via a vibration suppression member, or resilient damper 17. The eccentric shaft 15 has a distal end rotatably supported by a bearing 16a formed in the oscillation transmission member 16. Rotation of the eccentric shaft 15 oscillates the oscillation transmission member 16 relative to the case 11.

The oscillation transmission member 16 is enclosed in the brush unit 12. The brush unit 12 includes a tube 18, in which the oscillation transmission member 16 is arranged, and a brush portion 19, which is fixed to the distal end of the tube 18. The brush unit 12 is a consumable product and detachable from the oscillation transmission member 16 to enable replacement. Oscillation of the oscillation transmission member 16 oscillates the brush portion 19. A user holds the case 11, switches the power ON, and brushes his or her teeth with the oscillating brush portion 19 to clean the teeth. The oscillation amplitude S of the brush portion 19 is shown by the double-headed arrow in Fig. 1(b).

An electrical circuit for oscillating the brush unit 12 will now be discussed.

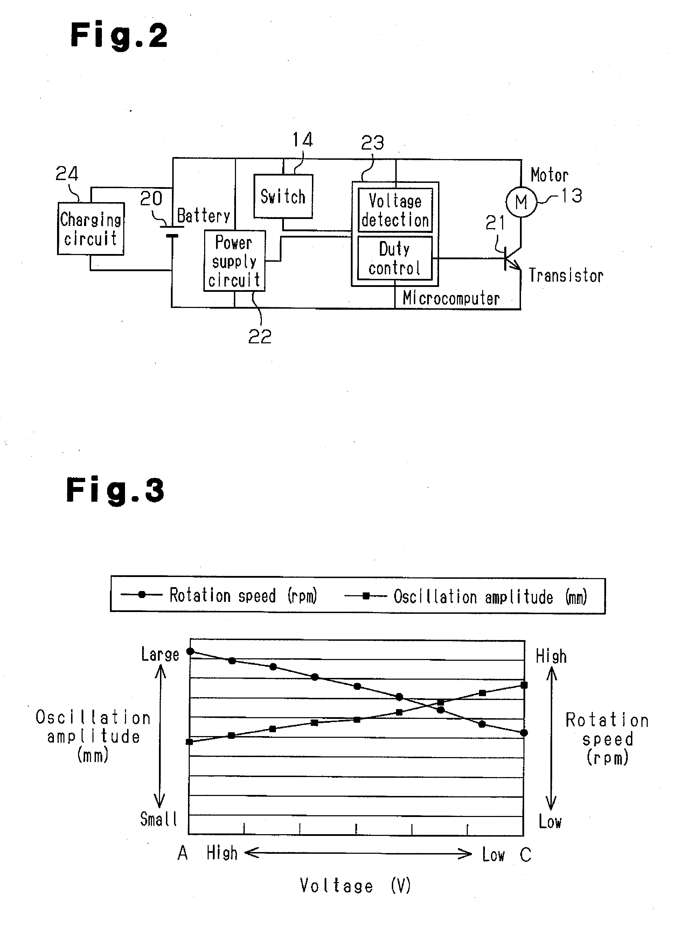

As shown in Fig. 2, the motor 13 is connected to a transistor 21, which serves as a switch element. A terminal of the motor 13 may be connected to the positive terminal of a battery 20 and another terminal of the motor 13 may be connected to the collector terminal of the transistor 21. The emitter terminal of the transistor 21 is connected to the negative terminal of the battery 20. Thus, the motor 13 is connected in series with the battery 20 via the transistor 21. When the base terminal of the transistor 21 is provided with a voltage signal (flow of current), the motor 13 is supplied with power supply voltage from the battery 20.

The battery 20 is connected to a power supply circuit 22. The power supply circuit 22 may include a booster circuit, which increases the power supply voltage from the battery 20. Further, the power supply circuit 22 is connected to a control unit 23, which functions as an oscillation amplitude regulation circuit. The control unit 23 detects the power supply voltage supplied to the motor 13 from the battery 20.

The control unit 23 is connected to the base terminal of the transistor 21. Based on the value of the detected power supply voltage from the battery 20, the control unit provides the base terminal with a predetermined voltage signal to switch ON and OFF the transistor 21 (duty-control). That is, the control unit 23 outputs a voltage signal over pulse duration periods that are based on the value of the detected power supply voltage from the battery 20. This supplies the motor 13 with the power supply voltage from the battery 20 in pulses of a pulse duration period that is based on the value of the power supply voltage and thereby produces rotation with the motor 13. Such a process will now be discussed in further detail.

Referring to Fig. 3, the oscillation amplitude S of the brush portion 19 usually decreases as the power supply voltage supplied to the motor 13 increases, and the oscillation amplitude S increases as the power supply voltage decreases. Further, the rotation speed of the motor 13 usually increases as the power supply voltage supplied to the motor 13 increases, and the rotation speed of the motor 13 decreases as the power supply voltage supplied to the motor 13 decreases. Factors such as the length and diameter of the eccentric shaft 15 and the heaviness of the weight 15b vary the relationship between the power supply voltage supplied to the motor 13 and the rotation speed of the motor 13. For example, the rotation speed of the motor 13 may decrease as the power supply voltage increases. In other situation, the rotation speed of the motor 13 may reach a peak when the power supply voltage is intermediate. It is thus apparent that the oscillation amplitude S of the brush portion 19 varies as the rotation speed of the motor 13 varies. In the first embodiment, the oscillation amplitude S of the brush portion 19 decreases as the rotation speed of the motor 13 increases.

Based on the value of the detected power supply voltage from the battery 20, the control unit 23 provides the base terminal of the transistor 21 with pulses of a voltage signal (pulse signal), which is generated to keep the rotation speed of the motor 13 constant. For example, when the value of the detected power supply voltage from the battery 20 increases, the control unit 23 shortens the pulse duration period during which the voltage signal is provided. When the value of the detected power supply voltage from the battery 20 decreases, the control unit 23 lengthens the pulse duration period during which the voltage signal is provided.

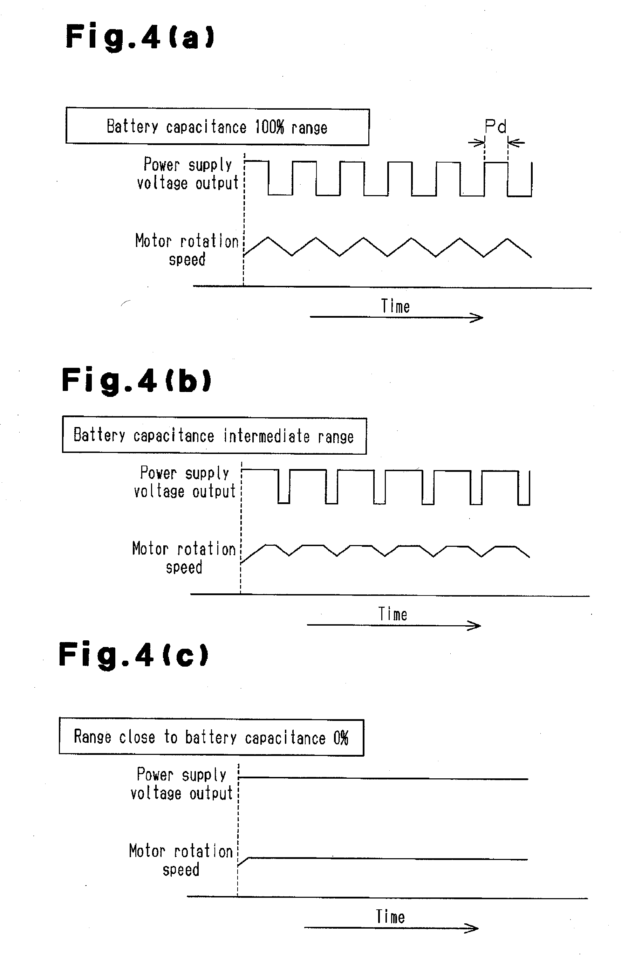

In one example, pulse duration periods set to keep the rotation speed of the motor 13 constant based on the value of the power supply voltage from the battery 20 are stored beforehand in a memory of the control unit 23. A pulse duration period PD is illustrated in Fig. 4(a). The control unit 23 provides the base terminal with a voltage signal over a pulse duration period corresponding to the value of the detected power supply voltage from the battery 20.

The motor 13 applies drive force to the rotary shaft 13a over the pulse duration periods during which it is supplied with power supply voltage. The interval is extremely short between the pulse duration periods during which power supply voltage is supplied. Thus, fluctuations in the rotation produced by the motor 13 are subtle and ignorable, and the rotation may be approximated as rotation at a constant speed. When the pulse duration periods during which the power supply voltage is supplied are relatively short as shown in Fig. 4(a), the constant speed may be slightly lower than when the motor 13 is continuously supplied with the power supply voltage.

In the first embodiment, the control unit 23 function to shorten the pulse duration period Pd during which the motor 13 is supplied with power supply voltage (refer to Fig. 4(a)) as the power supply voltage from the battery increases and lengthen the pulse duration period Pd during which the motor 13 is supplied with power supply voltage as the power supply voltage from the battery decreases. This regulates the motor 13 to a constant rotation speed. In this manner, the oscillation amplitude S of the brush portion 19 is regulated to be constant. In the first embodiment, the control unit 23 and the transistor 21 function as a pulse generation circuit.

Fig. 4 shows the power supply voltage, which is supplied in pulses, and the rotation speed of the motor 13. Figs. 4(a), 4(b), and 4(c) show situations in which the state of charge of the battery (battery capacitance or remaining battery level) are respectively high, intermediate, and low, for example, 100%, 50%, and about 0%. The power supply voltage of the battery 20 in the first embodiment is related to the state of charge of the battery 20.

The control unit 23, which is connected to the switch button 14, starts the motor 13 when the switch button 14 is switched ON. The battery 20 may be connected to a charging circuit 24. In such a case, the charging circuit 24 charges the battery 20 when the charging circuit 24 is connected to an external power supply.

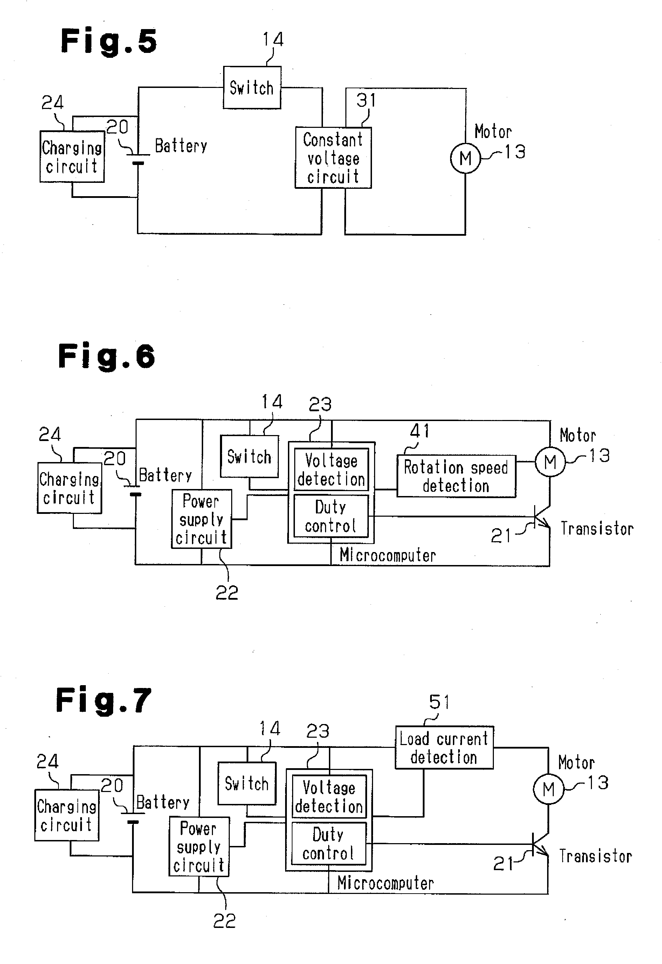

The first embodiment has the advantages described below.
(1) The oscillation amplitude regulation circuit detects the value of the power supply voltage supplied from the battery 20 and supplies the motor 13 with the power supply voltage in pulses of a pulse duration period set in accordance with the value of the power supply voltage. In one example, the oscillation amplitude regulation circuit regulates the rotation speed of the motor 13 to be constant by shortening the pulse duration period during which the power supply voltage is supplied when the value of the detected power supply voltage increases, and lengthening the pulse duration period during which the power supply voltage is supplied when the value of the detected power supply voltage decreases. Thus, the oscillation amplitude regulation circuit regulates the oscillation amplitude S of the brush portion 19 to keep it constant regardless of changes in the power supply voltage of the battery 20. This allows for the oscillation amplitude regulation circuit to produce high-speed rotations with the motor 13, while regulating the oscillation amplitude S of the brush portion 19 to always be constant even when the power supply voltage decreases. Thus, even when used for a long time, the brushing performance of the electric toothbrush 10 is not lowered.
   A second embodiment of the present invention will now be discussed. Like or same reference numerals are given to those components that are the same as the corresponding components of the first embodiment. Such components will not be described below.
   Referring to Fig. 5, the battery 20 is connected via the switch button 14 to a constant voltage circuit 31, which functions as an oscillation amplitude regulation circuit. When the switch button 14 is switched ON, the constant voltage circuit 31 is supplied with power supply voltage from the battery 20. When the switch button 14 is switched OFF, the supply of power supply voltage to the constant voltage circuit 31 is stopped (cut).
   The constant voltage circuit 31 is connected to the motor 13. The constant voltage circuit 31 converts the power supply voltage supplied from the battery 20 into a predetermined constant voltage and supplies the motor 13 with the constant voltage. The constant voltage supplied from the constant voltage circuit 31 rotates the rotary shaft 13a of the motor 13.
   In the second embodiment, the constant voltage circuit 31 converts the power supply voltage to voltage C (constant voltage), which is shown in Fig. 3. The voltage C is predetermined as a value that is lower than the maximum value A of the power supply voltage and drives the motor 13 at a rotation speed that is high and satisfactory. This allows for the motor 13 to produce high-speed rotations. When the value of the power supply voltage supplied from the battery 20 is higher than the voltage C, the constant voltage circuit 31 converts (lowers) the power supply voltage to the voltage C. When the value of the power supply voltage supplied from the battery 20 decreases to the voltage C or lower, the constant voltage circuit 31 converts (increases) the power supply voltage to the voltage C. This regulates the oscillation amplitude S of the brush portion 19 to be constant regardless of the decrease in the power supply voltage of the battery 20.
   The second embodiment has the same advantages as the first embodiment.
   A third embodiment of the present invention will now be discussed.
   Referring to Fig. 6, the motor 13 has one terminal connected to the positive terminal of the battery 20 and another terminal connected to the collector terminal of the transistor 21. The emitter terminal of the transistor 21 is connected to the negative terminal of the battery 20.
   The battery 20 is connected to the power supply circuit 22. The power supply circuit 22 is connected to the control unit 23, which includes a CPU and a RAM. The power supply circuit 22 supplies the control unit 23 with drive voltage that is suitable for driving the control unit 23. The control unit 23 is connected to the battery 20 and detects the power supply voltage supplied from the battery 20 to the motor 13. A rotation speed detection circuit 41 is connected to the control unit 23 to detect the rotation speed of the motor 13. This allows for the control unit 23 to detect the rotation speed of the motor 13.
   Based on both the value of the detected power supply voltage from the battery 20 and the rotation speed of the motor 13, the control unit 23 provides the base terminal of the transistor 21 with a predetermined voltage signal to switch ON and OFF the transistor 21. This will now be described in further detail.
   The control unit 23 provides the base terminal of the transistor 21 with a voltage signal over a pulse duration period that is in accordance with both the value of the detected power supply voltage from the battery 20 and the rotation speed of the motor 13. This supplies the motor 13 with the power supply voltage from the battery 20 in pulses of a pulse duration period that is in accordance with both the value of the detected power supply voltage from the battery 20 and the rotation speed of the motor 13 and thereby produces rotation with the motor 13.
   In one example, pulse duration periods set to keep the rotation speed of the motor 13 constant in accordance with both the value of the detected power supply voltage from the battery 20 and the rotation speed of the motor 13 are stored beforehand in a memory of the control unit 23. The control unit 23 provides the base terminal with a voltage signal over a pulse duration period corresponding to both the value of the detected power supply voltage from the battery 20 and the rotation speed of the motor 13. This supplies the motor 13 with the power supply voltage from the battery 20 in pulses. The motor 13 applies a drive force to the rotary shaft 13a over the pulse duration period during which it is supplied with power supply voltage. The interval is extremely short between the pulse duration periods during which power supply voltage is supplied. Thus, fluctuations in the rotation produced by the motor 13 are subtle and ignorable, and the rotation may be approximated as rotation at a constant speed.
   In the third embodiment, the control unit 23 shortens the pulse duration period during which the motor 13 is driven when the value of the power supply voltage from the battery 20 is high. Further, the control unit 23 lengthens the pulse duration period during which the motor 13 is driven when the value of the power supply voltage from the battery 20 is low. When the rotation speed of the motor 13 becomes lower than a predetermined rotation speed, the control unit 23 lengthens (prolongs) the pulse duration period during which the motor 13 is driven. This regulates the rotation speed of the motor 13 to be constant even when the power supply voltage of the battery 20 decreases or when an external load applied to the brush portion 19 impedes the rotation of the rotary shaft 13a. As a result, the oscillation amplitude S of the brush portion 19 is regulated to be constant.
   As discussed above in detail, in addition to the advantages of the first embodiment, the third embodiment has the advantages described below.
(2) The oscillation amplitude regulation circuit supplies the motor 13 with the power supply voltage in pulses of a pulse duration period set in accordance with the value of the power supply voltage from the battery 20 and the rotation speed of the motor 13 detected by the rotation speed detection circuit 41. Thus, the brush portion 19 always continuously moves in constant oscillation amplitude even when the external load applied to the brush portion 19 lowers the rotation speed of the motor 13. This prevents the brushing performance of the electric toothbrush 10 from being lowered during use. Further, the power supply voltage of the battery 20 is used without undergoing any conversions. This suppresses unnecessary drainage of the battery 20 and prolongs the life of the battery 20.
   A fourth embodiment of the present invention will now be discussed.
   Referring to Fig. 7, the motor 13 has one terminal connected to the positive terminal of the battery 20 and another terminal connected to the collector terminal of the transistor 21. The emitter terminal of the transistor 21 is connected to the negative terminal of the battery 20.
   The battery 20 is connected to the power supply circuit 22. The power supply circuit 22 is connected to the control unit 23, which functions as the oscillation amplitude regulation circuit. The control unit 23 includes a CPU and a RAM. The power supply circuit 22 supplies the control unit 23 with drive voltage that is suitable for driving the control unit 23. The control unit 23 is connected to the battery 20 and detects the power supply voltage supplied from the battery 20 to the motor 13. A load current detection circuit 51 is connected to the control unit 23 to detect the current flowing to the motor 13. This allows for the control unit 23 to detect the load current of the motor 13.
   Based on both the value of the detected power supply voltage from the battery 20 and the load current of the motor 13, the control unit 23 provides the base terminal of the transistor 21 with a predetermined voltage signal to switch ON and OFF the transistor 21. This will now be described in further detail.
   Duration periods set to keep the rotation speed of the motor 13 constant in accordance with both the value of the power supply voltage from the battery 20 and the load current of the motor 13 are stored beforehand in a memory of the control unit 23. The control unit 23 provides the base terminal with a voltage signal over a pulse duration period corresponding to both the value of the detected power supply voltage from the battery 20 and the load current of the motor 13. This supplies the motor 13 with the power supply voltage from the battery 20 in pulses. The motor 13 applies a drive force to the rotary shaft 13a over the pulse duration periods during which it is supplied with power supply voltage. The interval is extremely short between the pulse duration periods during which power supply voltage is supplied. Thus, fluctuations in the rotation produced by the motor 13 are subtle and ignorable, and the rotation may be approximated as rotation at a constant speed.
   In the fourth embodiment, the control unit 23 shortens the pulse duration periods during which the motor 13 is driven when the value of the power supply voltage from the battery 20 is high. Further, the control unit 23 lengthens the pulse duration periods during which the motor 13 is driven when the power supply voltage is low. Extensions are set beforehand for the pulse duration periods during which the motor 13 is driven in accordance with the load current of the motor 13 and stored, for example, the memory of the control unit 23. This regulates the rotation speed of the motor 13 to be constant even when the power supply voltage of the battery 20 decreases or when an external load applied to the brush portion 19 impedes the rotation of the rotary shaft 13a. As a result, the oscillation amplitude S of the brush portion 19 is regulated to be constant.
   As discussed above in detail, in addition to the advantages of the first embodiment, the fourth embodiment has the advantages described below.
(3) The oscillation amplitude regulation circuit detects the value of the power supply voltage supplied from the battery 20 and supplies the motor 13 with the power supply voltage in pulses of a pulse duration period set beforehand in accordance with the load current of the motor 13 detected by the load current detection circuit 51. Thus, the brush portion 19 always continuously moves in constant oscillation amplitude even when external load is applied to the brush portion 19. This prevents the brushing performance of the electric toothbrush 10 from being lowered during use. Further, the power supply voltage of the battery 20 is used without undergoing any conversions. This suppresses unnecessary drainage of the battery 20 and prolongs the life of the battery 20.

It should be apparent to those skilled in the art that the present invention may be embodied in many other specific forms without departing from the scope of the invention. Particularly, it should be understood that the present invention may be embodied in the following forms.

In the second and third embodiments, the oscillation amplitude regulation circuit detects the rotation speed or load current of the motor 13, measures the external load applied to the motor 13, and varies (prolongs) the pulse duration periods during which power supply voltage is supplied in accordance with the measured external load. Instead of the rotation speed or load current, the oscillation amplitude regulation circuit detects back electromotive force. More specifically, if a external load is produced, the oscillation amplitude regulation circuit may detect the back electromotive force generated when the motor 13 is not supplied with power supply voltage, measure the external load applied to the motor 13, and vary (prolong) the pulse duration periods during which power supply voltage is supplied in accordance with the value of the measured back electromotive force.

The present examples and embodiments are to be considered as illustrative and not restrictive, and the invention is not to be limited to the details given herein, but may be modified within the scope and equivalence of the appended claims.

## Claims

1. An electric toothbrush (10) comprising:
a brush portion (19);
a motor (13) including a rotary shaft (13a);
a battery (20) which supplies the motor (13) with power supply voltage;
an eccentric shaft (15) which rotates together with the rotary shaft (13a), in which the eccentric shaft (15) has a center of gravity located at a position deviated from an axis of the rotary shaft (13a) of the motor (13);
an oscillation transmission mechanism (16) which transmits oscillations generated by the rotation of the eccentric shaft (15) to the brush portion (19); and
an oscillation amplitude regulation circuit (23, 21; 31) which regulates an oscillation amplitude (S) of the brush portion (19) to be constant regardless of changes in the power supply voltage in a state in which the brush portion (19) is free from external loads.

2. The electric toothbrush (10) according to claim 1, wherein the oscillation amplitude regulation circuit includes a pulse generation circuit (23, 21) which supplies the motor (13) with the power supply voltage in pulses of a predetermined pulse duration period set to regulate the oscillation amplitude (S) of the brush portion (19) to be constant in accordance with the value of the power supply voltage supplied from the battery (20).

3. The electric toothbrush (10) according to claim 1, wherein the oscillation amplitude regulation circuit (31) converts the power supply voltage supplied from the battery (20) into constant voltage for regulating the oscillation amplitude (S) of the brush portion (19) to be constant, and supplies the motor (13) with the constant voltage.

4. The electric toothbrush (10) according to claim 2, wherein the oscillation amplitude regulation circuit (23):
detects load current applied to the motor (13) when external load is applied to the motor (13); and
supplies the motor (13) with the power supply voltage in pulses of the predetermined pulse duration period set to regulate the oscillation amplitude (S) of the brush portion (19) to be constant in accordance with both the value of the power supply voltage supplied from the battery (20) and the value of the detected load current.

5. The electric toothbrush (10) according to claim 2, wherein the oscillation amplitude regulation circuit (23):
detects rotation speed of the motor (13) when external load is applied to the motor (13); and
supplies the motor (13) with the power supply voltage in pulses of the predetermined pulse duration period set to regulate the oscillation amplitude (S) of the brush portion (19) to be constant in accordance with both the value of the power supply voltage supplied from the battery (20) and the detected rotation speed.

6. The electric toothbrush (10) according to claim 2, wherein the oscillation amplitude regulation circuit (23):
detects back electromotive force of the motor (13) when external load is applied to the motor (13); and
supplies the motor (13) with the power supply voltage in pulses of the predetermined pulse duration period set to regulate the oscillation amplitude (S) of the brush portion (19) to be constant in accordance with both the value of the power supply voltage supplied from the battery (20) and the value of the detected electromotive force.

7. The electric toothbrush (10) according to claim 2, wherein the pulse generation circuit (23, 21) includes:
a memory (23) which stores the value of the power supply voltage supplied from the battery (20) in association with the predetermined pulse duration period set to regulate the oscillation amplitude (S) of the brush portion (19) to be constant; and
a switch element (21) which functions in accordance with a pulse signal having a pulse duration period stored in the memory (23);
wherein the power supply voltage is supplied in pulses to the motor (13) via the switch element (21).
